# EUROPEAN PATENT SPECIFICATION

(11) **EP 2 127 320 B1**
(45) Date of publication and mention of the grant of the patent: **13.10.2010**
(21) Application number: 08728707.4
(22) Date of filing: 31.01.2008
(51) Int. Cl.: H04L 29/08

(54) **SYSTEM, METHOD AND DEVICE FOR PROVIDING SECONDARY INFORMATION TO A COMMUNICATION DEVICE**
SYSTEM, VERFAHREN UND VORRICHTUNG ZUR BEREITSTELLUNG SEKUNDÄRER INFORMATIONEN FÜR EINE KOMMUNIKATIONSVORRICHTUNG
SYSTÈME, PROCÉDÉ ET DISPOSITIF SERVANT À TRANSMETTRE DES INFORMATIONS SECONDAIRES À UN DISPOSITIF DE COMMUNICATION

(30) Priority: 31.01.2007 US 669589
(43) Date of publication of application: 02.12.2009
(73) Proprietor: Sony Ericsson Mobile Communications AB, 221 88 Lund (SE)
(72) Inventor: BLOEBAUM, L. Scott, Cary, North Carolina 27519 (US); LIU, Charles, Chapel Hill, North Carolina 27514 (US); MINBORG, Per-åke, S-SE-444 60 Stora Hoga (SE)
(74) Representative: Banzer, Hans-Jörg
(86) International application number: PCT/US2008/052643
(87) International publication number: WO 2008/095090

(56) References cited:
- EP-A- 1 708 505
- WO-A-01/54372
- WO-A-02/43353
- US-B1- 6 993 290

## Description

### BACKGROUND OF THE INVENTION

### Field of the Invention

The present invention relates generally to retrieving information for devices in a communications network. More specifically, the invention relates to a system, method and device for providing secondary information to a communication device.

### Description of the Related Art

With the convergence of voice and data communication networks, portable communication devices are increasingly likely to support several communication modes, as well as a number of communication-related applications. Single-purpose cellular phones and alphanumeric pagers have given way to complex mobile devices supporting voice communications, e-mail, and instant messaging. A typical device often includes a camera, a music player, and sound recorder, and may include a global positioning system (GPS) receiver. Many of these devices and their supporting wireless networks now enable simultaneous use of multiple communication modes. Thus, a device user today might engage in a voice call and simultaneously send or receive text messages, digital images, video clips, or the like.

Various new user services have been developed to take advantage of this simultaneous availability of multiple communications modes. In particular, several patents and patent application publications describe a so-called Phone Pages system, in which the generation and transfer of multimedia data objects is triggered by various communication-related events. These data objects, or Phone Pages, thus supplement a primary communication session, such as a voice call, an e-mail exchange, or an instant message conversation. The Phone Pages concept is described in the following patents and patent application publications: U.S. Patent No. 6,922,721, titled "Exchange of Information in a Communication System" and issued on July 26, 2005 to Minborg et al.; U.S. Patent Application Publication 2005/0271041 A1, titled "Exchange of Information in a Communication System" and filed on June 1, 2005 by Minborg et al.; U.S. Patent No. 6,996,072, titled "Method and Apparatus for Exchange of Information in a Communication Network" and issued on February 7, 2006 to Minborg; U.S. Patent No. 6,977,909, titled "System and Method for Exchange of Information in a Communication Network" and issued on December 20, 2005 to Minborg; and U.S. Patent Application Publication 2006/0114845, also titled "System and Method for Exchange of Information in a Communication network" and filed on November 14, 2005 by Minborg.

EP 1 108 505 discloses a system where data related to mass media content is determined by a matching process.

The communication techniques and systems described in the preceding references provide a variety of enhancements to conventional modes of communication, facilitating the convenient exchange of various data objects between users of communications devices. These enhancements may be quite valuable both for promoting personal relationships and for supporting business and enterprise communications. However, there remain problems in the present way of accessing the Internet for specific data objects because of the non-obvious way of addressing data objects. There is further a need in the telecommunications industry to provide a simpler way of accessing the Internet and to guide a user by other means than, for example, simply providing the address of a portal, from where the user is left on her own to be further guided to the desired homepage or data object.

### SUMMARY OF THE INVENTION

A method and device for providing secondary information to a communication device are disclosed. According to one embodiment, a method performed in a user's communication device for providing secondary information to a communication device comprises the steps of (1) receiving at least one user preference; (2) engaging in a primary communication with a first data source via a first communication channel; (3) scanning the primary communication for a match with the user preference; (4) in response to detecting a matched user preference, requesting a data object corresponding to the matched user preference from a server via a second communication channel; and (5) receiving the requested data object. The sever may be a phonepage server.

According to another embodiment of the present invention, a communication device for receiving secondary information related to a primary communication is disclosed. The communication device may include a communication unit for communicating with a data source via a first communication channel and a server via a second communication channel; a preference application that receives at least one user preference; a scanning application that scans the primary communication for a match with the user preference and initiates a triggering event in response to a match; and a request application that requests a data object in response to the match via the second communication channel.

The server may be a phonepage server. The user preference may be entered by a user, or it may be downloaded over a network. The primary communication may be a voice communication or a data communication, including an audio stream, a video stream, and a text message.

The scanning application may scan metadata of the primary communication for a match with the user preference or may scan renderable content of the primary communication for a match with the user preference. The scanning application may use an image recognition algorithm and/or an audio recognition algorithm to scan the renderable content of the primary communication.

### BRIEF DESCRIPTION OF THE DRAWINGS

The invention will now be more thoroughly described with reference to the accompanying figures, where:
Figure 1 illustrates an overview of a communication infrastructure overview according to one embodiment of the invention;
Figure 2 illustrates a first flow diagram of a subscriber interaction in an A-party UE according to one embodiment of the present invention;
Figure 3 illustrates a first flow diagram of a subscriber interaction in a data server according to one embodiment of the present invention;
Figure 4 illustrates a second flow diagram of a subscriber interaction in an A-party UE according to an embodiment of the present invention;
Figure 5 illustrates a case when event detection has been implemented in a terminal;
Figure 6 illustrates a third flow diagram of a subscriber interaction in an A-party UE according to another embodiment of the present invention;
Figure 7 illustrates a flow diagram of a subscriber interaction in a B-party UE according to an embodiment of the present invention;
Figure 8 illustrates an exemplary block diagram of a UE according to one embodiment of the invention;
Figure 9 illustrates a block diagram of a data object server in a data network according to one embodiment of the invention;
Figure 10 illustrates a flow diagram of B-number indication procedure according to one embodiment of the present invention;
Figure 11 illustrates a flow diagram of A-number indication procedure according to one embodiment of the present invention;
Figure 12 illustrates an exemplary block diagram of a UE where the UE is connected to a fixed network according to one embodiment of the invention;
Figure 13 illustrates an exemplary block diagram of a UE where the UE consists of a PDA and a mobile phone according to one embodiment of the invention;
Figure 14 illustrates a system for providing secondary information to a communication device according to one embodiment of the present invention;
Figure 15 illustrates an exemplary block diagram of a UE according to another embodiment of the invention;
Figure 16 illustrates a flowchart depicting a method for providing secondary information to a communication device according to one embodiment of the present invention.

### DETAILED DESCRIPTION

The present invention will now be described with references to a telecommunications system based on GSM as a circuit switched communication system and GPRS as a packet switched communications system. It should however be noted that the embodiments described are to be considered exemplary and that other packet and circuit switched systems may equally well be considered, both fixed- as well as mobile- and with any access technology, *e.g*., Time Division Multiple Access (TDMA), Code Division Multiple Access (CDMA), Frequency Division Multiple Access (FDMA), Orthogonal Frequency Division Multiple Access (OFDMA), Time Division Duplex (TDD), Frequency Division Duplex (FDD) or any combinations thereof. The invention is not restricted to any specific type of communications network or access technology.

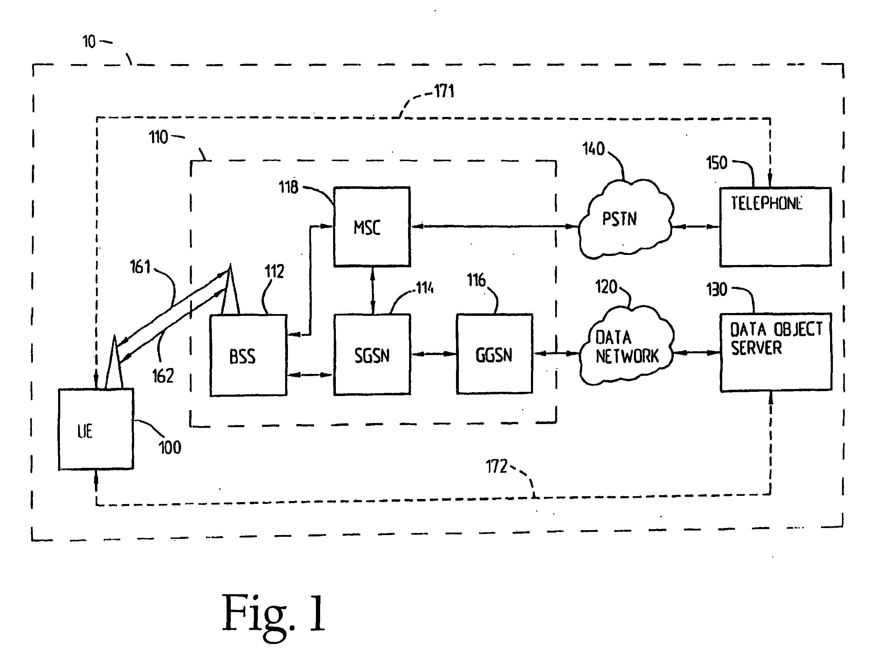

Figure 1 illustrates a communication infrastructure overview, 10, where a number of different communication networks are interconnected. Figure 1 includes both nodes included in a Circuit Switched (CS) mobile communication network, *e.g*., a Mobile Switching Center (MSC), 118, and Base Station Subsystem (BSS), 112, as well as nodes included in a Packet Switched (PS) mobile communication network, *e.g*., Serving GPRS Support Node (SGSN), 114 and a Gateway GPRS Support Node (GGSN), 116. Typically, the SGSN includes functionality such as re-segmenting data packets formed according to one protocol into data packets according to protocols used over the air interface. The SGSN also includes control mechanisms for one or several BSS, 112 as well as Quality of Service (QoS) mechanisms. The GGSN includes functionality required to maintain communication between a mobile packet data network and other packet data networks, *e.g*., data network 120. The CS part of the network connects to a PSTN network, 140, and the PS part of the network connects to a data network, 120. The data network may be both an external or internal network, *i.e.*, with global or limited access possibilities. As shown, the PS and CS parts of the network may also be interconnected by way of an interface between the MSC, 118 and the SGSN, 114. The BSS, 112, may serve both the PS as well as the CS part of the network with packet switched (161) as well as circuit switched (162) communication resources over the air, to provide mobility to both PS and CS service users and their User Equipment (UE), 100. The UE, 100, may for example be a mobile telephone or a mobile telephone connected to any kind of data equipment, *e.g*., Personal Digital Assistance Devices (PDA) or laptop computer. The PSTN, 140, provides users (user devices) connected to the fixed network with service, *e.g*., to "plain old telephones" (POTs), facsimile or data modem devices, 150. Other examples of devices connected directly or indirectly to the PSTN, 140, are ISDN terminals and communication devices connected via a Digital Subscriber line (DSL) (*e.g.*, ADSL, HDSL and XDSL).

The data network, 120, typically includes one or several routers (not illustrated) and data bridges such that several nodes may be interconnected and communicate with each other. The data network used in connection with the present invention includes also a data object server, 130. Typically, pluralities of data object servers are included in a data network, although, for reasons of explanation and clarity, only one data object server, 130, is illustrated in Figure 1. Examples of data networks are Internet and Intranet networks. The UE, 100, may obtain a complete logical connection 171 to an indicated B-party telephone, 150, connected to the PSTN, 140, through the CS communication channel, 162, provided between the UE, 100, and the BSS, 112, and further via the MSC node, 118, over which conversation may be conducted between either party UE 100 and telephone 150. Similarly, the UE, 100, may obtain a complete logical connection 172 to equipment, *e.g*., data object server, 130, connected to the data network, 120, through the PS communication channel, 161, provided between the UE, 100 and the BSS, 112, and further via the SGSN, 114 and GGSN, 116, node, over which data may be sent between either party UE 100 and data object server 130.

Element 140 can in some embodiments be a PSTN/ISDN, and then element 150 could also be a mobile phone. In other embodiments there can also exist the case of all IP, *i.e.*, UE 100 has real-time voice communication with a packet data device.

According to one aspect of the present invention a data object server, 130, includes graphical information objects, *i.e.*, phonepages, associated to a telephone number. The telephone number is identical to a subscriber number, *i*.*e*., an A- or B- number, addressing an originating user equipment or a terminating user equipment, respectively. The A-party, upon dialing a B-number, connects to a data object server, 130, by way of PS communication channel and receives a data object, *i*.*e*., a "phonepage" stored in a memory position in the data object server, with a memory address corresponding to the B-number dialed. The phonepage may consist of information about the B-party, or it may simply provide an immediate access to an internal or external data network as maintained by the B-party subscriber. Alternatively, the B-party phonepage may consist of information regarding a B-party user, *e.g*., phone number, address and other information. After having received the B-party phonepage, one or several procedures may follow. If the B-number is addressing a POT, 150, a circuit switched voice connection may be setup. If the B-number is addressing another device, other events may occur. This is of course also dependent upon the A-party device, UE, 100, used.

In a variant of the present invention, the UE, 100, does not support the use of a PS communication channel, but can retrieve data objects by other means, such as a Short Message Service (SMS) or a temporary CS communication channel. In a variant of the present invention, a PS communication channel, for example having a particular QoS, is used for conveying speech within the communication system 10 whereby the PSTN, 140, and the data network, 120, is interconnected by some means (not shown in Figure 1).

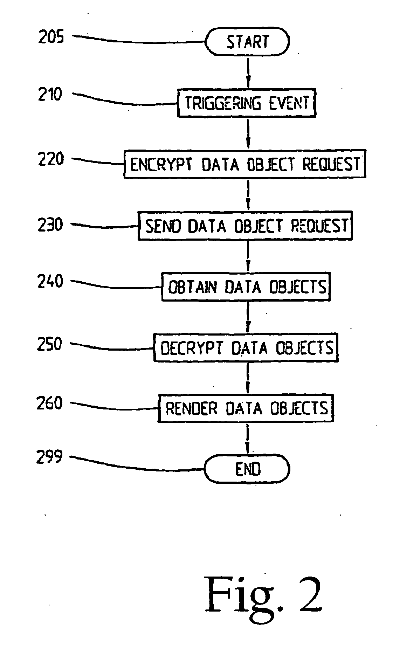

Figure 2 illustrates a flow diagram of a procedure in a UE (like the UE, 100) for communicating a phonepage to an A-party using the UE, according to one embodiment of the present invention. In step 205, the procedure starts by an initiation from the A-party, (*e.g*., a UE is switched on). In step 210, a trigger of a phonepage request is indicated, either automatically (*e.g*., a call is terminated by the other party) or manually by the A-party (*e.g*., the dialing of a B-number). The triggering event, 210, may be at least one of a number of events, *e.g*.:
- An outgoing call is or is about to be initiated.
- An addressed B-party answers a call.
- An addressed B-party is busy.
- An addressed B-party does not answer.
- An addressed B-party rejects a call.
- An addressed B-party is unavailable (*e.g*., an addressed mobile phone is out of coverage).
- An incoming call is imminent or has just started.
- A conference call is or is about to be initiated.
- A call is disconnected.
- A call is conducted (under which several triggering events can be generated).
- A subscriber is put on hold.
- A new cell in the Public Land Mobile Network (PLMN) has been selected.
- The location of a subscriber has changed.
- A new PLMN operator is selected.
- A new country of registration is made.
- A UE is about to be switched off.
- A UE has been switched on.
- When a designated button on a UE is pressed.
- In response to a talk spurt received by a UE.
- A voice mail has been left to a subscriber.
- An SMS has been sent to a subscriber.

According to one aspect of the present invention a data object server, 130, includes graphical information objects, *i.e.*, phonepages, associated with an address indication such as a telephone number, or an Internet address such as an IPv6 address. The telephone number is identical to a subscriber number, *i.e.*, an A- or B- number, addressing originating user equipment or a terminating user equipment, respectively. The A-party, upon dialing a B-number, connects to a data object server, 130, by way of PS communication channel and receives a data object, *i.e.*, a "phonepage" stored in a memory position in the data object server, with a memory address corresponding to the B-number dialed. The data object server may comprise the phonepage with information about the B-party directly, or it may simply provide an immediate access to a location in an internal or external data network as maintained by the B-party subscriber, *i.e.*, the object server 130 first functions as a number server providing a translation of the provided B-number to a corresponding URI where the phonepage resides, which may be at a physically separate phonepage object server. The translation and provision of the actual requested phonepage can be either transparent, *i.e.*, the phonepage number server forwards, or dispatches, the phonepage request to an appropriate phonepage object server, which phonepage object server communicates directly, or indirectly via the name server, to the requester, or the phonepage number server returns the URI of the requested phonepage to the requester after which the requester will be redirected by using the URI to request the desired phonepage.

The B-party phonepage may comprise information regarding a B-party user, *e.g*., phone number, address and/or other information. The B-party phonepage may also comprise information regarding the addressed B-party's user equipment, which, for example, can be a fax. After having received the B-party phonepage, one or several procedures may follow. If the B-number is addressing a POT, 150, a circuit switched voice connection may be setup. If the B-number is addressing another device, other events, such as when a pay service is used, may occur. This is of course also dependent upon the A-party device, UE, 100, used.

According to another aspect of the present invention a phonepage can be associated with an Internet address such as an IPv6 address, SIP address or an email address. A phonepage is a data object that is linked to a unique identifier such as a telephone number or an internet address such as an IPv6 address, but not located or retrieved from the place that the unique identifier identifies.

Referring once again to Figure 2, the A-party initiates a data object request in step 230, possibly after encryption in step 220, and sends this request via a communication channel to a data object server. The data object request may include at least one of a number of different parameters, *e.g*.:
- A requested protocol to be used for transmission (*e.g*., WAP, WML, HDML, HTML).
- An identification of a data object server (*e.g*., a server name or a plain IP address).
- A code denoting what kind of event that triggered the data object request (*e.g*., outgoing call setup).
- The indicated B-number associated to at least one B-party equipment.
- An A-party identity, *e.g*., an A-number of a mobile station.
- A network address of the A-party (*e.g.*, IP address) used by the data object server when returning a requested data object.
- A capability code indicating the displaying capabilities of the A-party (*e.g*., screen resolution, audio, etc.).
- A code indicating an encryption scheme or encryption key used.
- A code indicating in what country the mobile station is registered (country code).
- A code identifying the current PLMN (V-PLMN) operator or the PLMN where the A-party has a subscription (H-PLMN) or both.
- A code indicating the vendor of the mobile station and the type of the mobile station.
- A code indicating an equipment unique identity.
- A validation code (*e.g*., a checksum) of the parameters.

The data object request in 230 may, according to a variant of the invention, be answered by the data object server in an encrypted format, in which case a decryption in step 250 follows the reception of the response in the user equipment.

In the next step follows a rendering procedure in step 260, where the data objects are displayed according to the capability of the UE, after which the procedure is ended at step 299. Typically after step 299, there will follow one or several procedures according to the capability of the A-party UE or the type of equipment addressed by a B-number. For example, a call may be set up or a call may be disconnected.

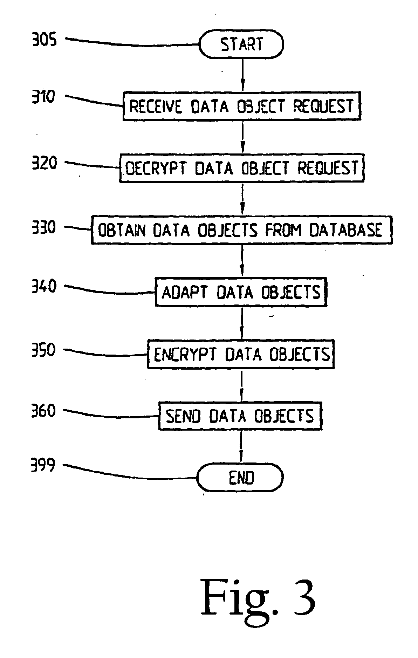

Figure 3 illustrates the corresponding procedures in a data object server (like the data object server 130), wherein, in step 305, the procedure starts and in step 310, the data object server receives a request for a data object. The request may typically include at least an indication corresponding to an A- or B- number and what kind of action that triggered the request. If the request is encrypted, decryption will be made in step 320, before interpreting the content. The address indication (*e.g.*, A- or B- number) in the request received in step 310 will be mapped with a memory address in the data object server, or to an address in the data object server's connected memory, and the data object, *i.e.*, phonepage, will be retrieved in step 330. The request in step 310 may also include an indication of a UE display capability, in which case the data object may be adapted in the data object server to a specific rendering capability, step 340, of a receiving UE. If the request was encrypted, or if requested for some other reason, the data object will be encrypted in step 350 before it is returned to the requesting UE, in step 360 and then the procedure is ended in the data object server in step 399.

A data object server may either provide a phonepage directly or just a pointer to a phonepage, the pointer suitably being a URI. In some embodiments, when the data object server does not comprise the phonepages itself, the data object server will forward, *i.e.*, dispatch, the request to the actual phonepage server or provide the requester with the URI to the phonepage. In the event of a dispatch, the data object server forwards the received data object request, with all appropriate parameters, to the second server, which then transfers the requested phonepage to the user equipment. Alternatively, the second server may transfer the requested phonepage to the data object server that received the request, for relaying to the user equipment.

In other embodiments, a phonepage request may be redirected. In these embodiments, the data object server returns a URI pointing to a second server to the requesting user equipment and the user equipment makes a new request to the second server using the supplied URI. The second server then fulfills the request by transferring, either directly or indirectly, the requested phonepage to the user equipment.

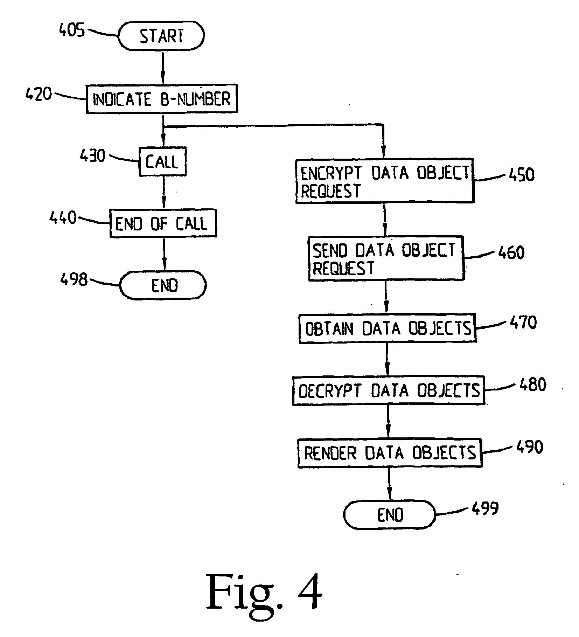

In Figure 4 is illustrated a flow diagram of procedures included when a circuit switched connection is initiated from a UE, according to one aspect of the present invention. In step 405, the procedure is started when the mobile station is not involved in a call session and when a user, *e.g*., starts to indicate a B-number to a B-party, step 420, by pressing a digit, a button or by activating voice recognition means. During step 420 the entire B-number is obtained. The mobile station now sets up two different connections, a circuit switched connection for a voice communication channel in step 430-440-498, and a packet switched communication channel for retrieval of a phonepage in step 450-499.

For the circuit switched procedures, a voice connection with a B-party is initiated in step 430, and a communication resource is assigned by a mobile network over which a telephone conversation may take place. The telephone conversation is ended in step 440 as any ordinary voice call, for example by pressing a designated button on the mobile station or hanging up a handheld part of a fixed network telephone. Ending the call also involves de-allocation of relevant communication resources within the circuit switched part of the mobile communication network as well as *e.g*., any PSTN resources involved in the connection.

The packet switched procedures basically follow the procedures described in connection to Figure 4, where a data object request is sent, possibly after encryption, steps 450 and 460, and a response is received and the phonepage displayed, possibly after proper decryption thereof, steps 470-490, after which the packet switched connection also ends, in step 499.

Now follows an example of a protocol implementation between the UE (100) and the Data Object Server (130). The phonepage service relies generally on the following components: an event-detection function residing either in the user's terminal or in the network; a PhonePage Number Service (PNS) which handles phonepage requests, retrieval of concerned phonepage, and downloading of the information to the involved terminals; and one or more PhonePage Web Servers (PWS) where phonepages are stored and managed.

A PhonePage Number Service (PNS) may be implemented using two node types: local and root PNS. The root PNS receives registrations from PWSs and keeps the local PNS updated. The local PNS acts as a kind of "proxy" between the terminal and the PWSs. In one aspect of the invention a local PNS contains an update client that regularly checks for updates with the root PNS. If there are entries more recent than the last successful local PNS update time, the new entries are conveyed from the root PNS to the local PNS. If communication is performed over the open Internet, information may be encrypted (*e.g*., using the https: or IPSec protocol). There are other means for keeping the different databases up to date. For example, the root PNS may, upon changes in its database, contact a plurality of local PNS's and, based on their individual update status, convey any changes to the local PNS's. Again information may be protected as described above.

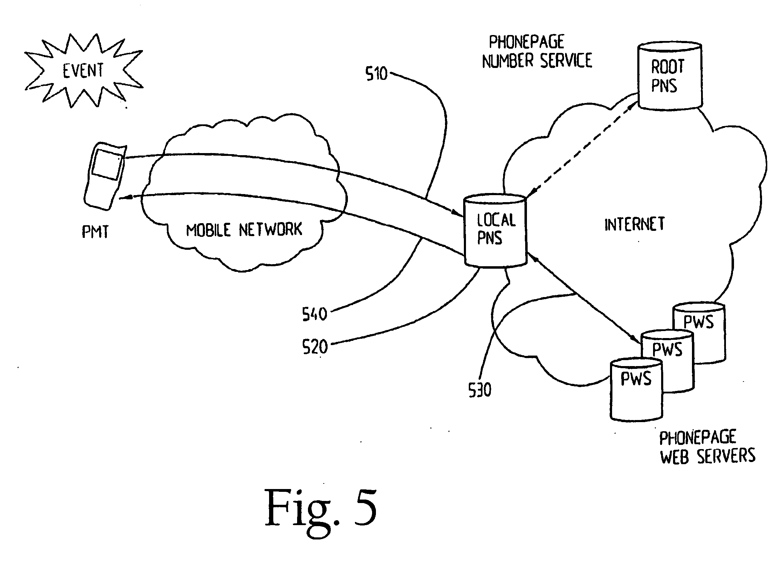

Figure 5 illustrates the case of a mobile phone user where the event-detection function has been implemented in the terminal. The client in the mobile terminal detects an event and requests 510 a phonepage. The Local PNS 520 receives the requests and finds out in which PWS the phonepage is located. The local PNS retrieves 530 the phonepage from the concerned PhonePage Web Server. The phonepage is downloaded 540 to the terminal.

In general when the Mobile Terminal (MT) detects an event, the MT send a PNS Request to the Local PNS. The PNS Request from a MT client to the PNS may be implemented as a HTTP request using the GET method. The URI used in the HTTP request is denoted request URI. The request URI is a URI identifying the resource upon which to apply the request. The request URI contains the host name of the Local PhonePages Number Server (PNS), a host path (*e.g*., denoting an appropriate server) and a parameter list. No specific header information in the HTTP request is required.

The parameters included in the phonepage request may include an indication of the triggering event. In some embodiments, this indication may be encoded, *e.g*., with a numeric value. For example, the phonepage request may include a parameter designated "eventnumber_value", encoded to indicate one or more of the various possible trigger events.

The parameters may also include one or more identifiers indicating one or both of the communication terminals relevant to the particular event. The parameters may further include information indicating one or more capabilities of the requesting terminal, such as a graphics capability, audio capability, data bearer capabilities, or the like.

After receiving and interpreting a phonepage request, a Local PNS server responds with a standard HTTP response message containing the phonepage content. Note that part of the phonepage content may be references (*e.g*., links) to resources located on other servers (*e.g*., the PWS) than the Local PNS. In such cases, the actual transfer of the referenced data will be carried out between the MT and the servers hosting the references resources and not pass through the Local PNS.

When the Local PNS receives a PNS Request from the MT, the Local PNS looks up the address to the PWS where the requested phonepage is located. The Local PNS then requests the phonepage from the PWS by sending a HTTP request equal to the PNS Request message as described above. Note that the host_name and host_path parts of the request URI in this case are equal to the host name and path of the PWS. The PWS responds with a standard HTTP response message containing the phonepage content.

The protocol between the PWS and the Root PNS may be based on HTTP and is used for registration and management of phonepage entries in the PNS. In order to provide a secure transport mechanism the HTTPS (Secure Hypertext Transfer Protocol) can be used.

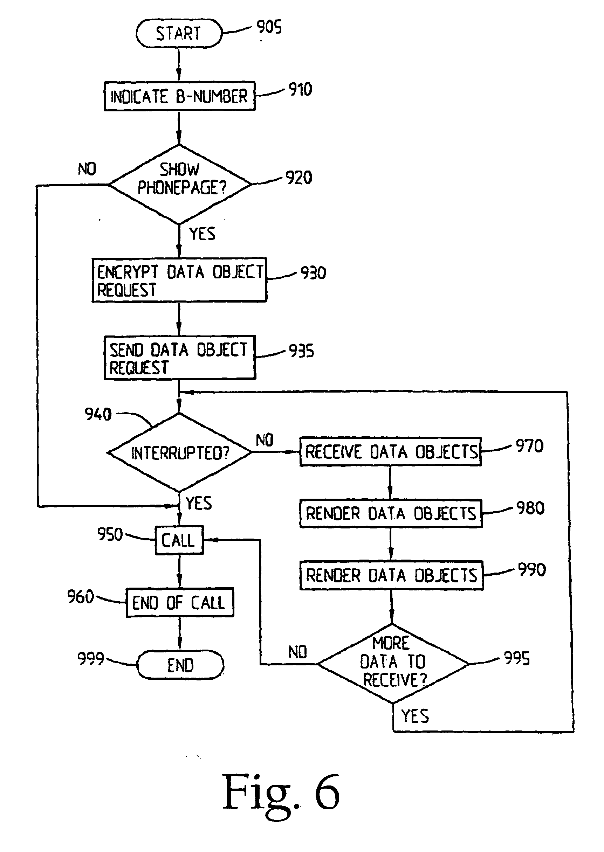

Figure 6 illustrates a similar procedure to that explained with reference to Figure 4, but where the data object request is completed before the call session is begun. In step 905 the procedure starts and in step 910, the B-number is indicated as described above in reference to Figure 4. In this embodiment, a step 920 is introduced where it is possible to select if a phonepage is to be requested or not. This can typically be a selection made by the user, and/or indicated by the B-number dialed by appropriate setting. According to one embodiment of the current invention, double clicking on a designated SEND button indicates that the phone page is to be requested. If it is indicated that a phonepage is not desired, then follows in step 950-960 and 999 a circuit switched call connection and termination as explained in relation to Figure 4, steps 430, 440 and 498.

If it is indicated that a phonepage is desired, then the hollowing steps are to encrypt, 930, and send, 935, a data object request on a packet switched communication channel. As long as the packet session is not interrupted, 940, the download of data object continues to the A-party. Data objects are received in step 970, decrypted, if encrypted, in step 980 and rendered in step 990. In step 995 the data objects are detected and as long as there is more information to receive, step 995, and there is no interruptions in step 940, the data download continues. A possible interrupt may occur, *e.g*., when a user wishes to no longer wait for a complete download of a phonepage and instead initiates the circuit switched communication in step 950. This may be initiated by a time expiring or by manually indicating on a man-machine interface (MMI). At the latest, the circuit switched communication is initiated when there is no more phonepage data to download. According to another embodiment of the present invention the phonepage for a UE is obtained from the data object server, 130, upon call completion or whenever the UE is not involved in a call, and is stored locally in the UE being readily available upon a next triggering event.

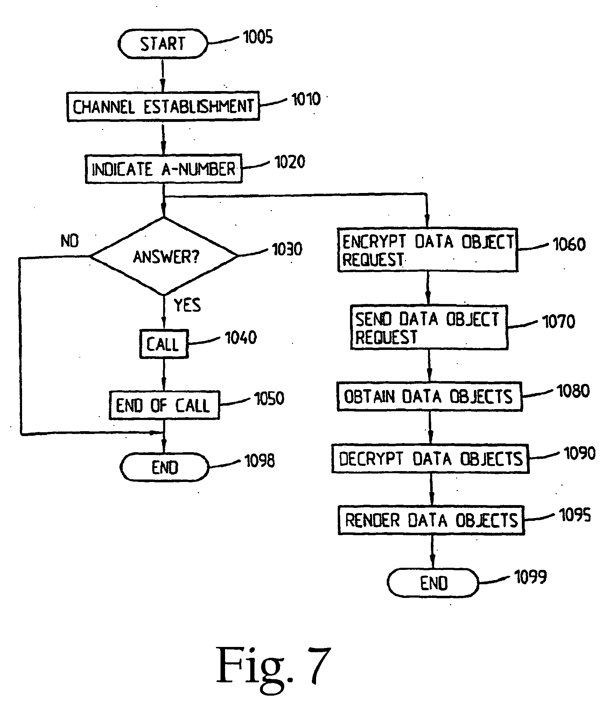

So far, the retrieval of phonepages to display in A-party equipment has been addressed. It should be recognized that a B-party may similarly also display a phonepage related to a connection, preferably a phonepage identified with the A-party number. In Figure 7 is illustrated a flow diagram of the procedures in B-party user equipment for retrieval of A-party phonepages according to one embodiment of the present invention. The procedure begins in step 1005, *e.g*., by an incoming call to a B-party UE. In step 1010 a communication channel is allocated between the UE and the network, 110, it is connected to. In step 1020, an indication of the call originating identity, *i.e.*, the A-party identity, preferably, an A-number, is revealed to the B-party. Then in step 1060 and 1070, a request is sent, subsequent to encryption thereof, to a data object server. The request is, when received in the server, treated similar as the requests received from the A-party, *i.e.*, decrypted if necessary, and responded to in the transmission of a data object related to the A-party identity. The UE receives the data objects, *i.e.*, phonepage in step 1080 and after decryption in step 1090, if necessary, the phonepage can be displayed to the B-party user in step 1095.

If the call is answered in 1030, the voice connection may follow the same procedures as those described in relation to Figure 3 and 4. If the call is not answered the voice part sequence ends in 1098.

For reasons of clarification, several steps in the signaling between the UE 100 and the communication infrastructure 110 and between the UE 100 and the data object server 130 have been omitted in several embodiments above, and focus has been put on the necessary and novel steps according to the invention, in the aforementioned signaling. It should be understood that other procedures (*e.g*., authentication, channel assignment and charging) might occur in addition to what has been described in the aforementioned signaling.

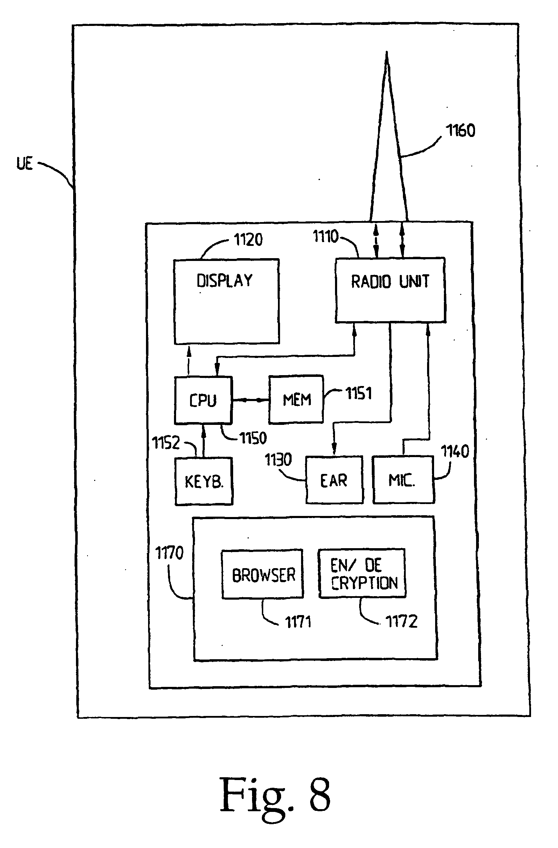

Figure 8 illustrates a UE to be used in one embodiment of the present invention, where the UE is a mobile telephone or a PDA with mobile telephone capabilities. A Central Processing Unit (hereafter CPU) 1150 is connected to at least one memory unit 1151, and at least one display 1120. The CPU 1150 may also be connected to a keyboard device or area 1152 to allow subscribers to enter, for example, digits. The memory unit 1151 may be non-volatile (*e.g*., EEPROM or SIM card) in order to retain stored information, should power be temporarily unavailable. The CPU 1150 is further connected to a radio unit 1110 that may convert incoming and outgoing data to RF modulated signals. The radio unit 1110 also connects to an antenna 1160 allowing the RF modulated signals to be received/transmitted to an RF compatible media (*e.g*., air). The radio unit 1110 may also directly or indirectly be connected to an earphone 1130 and a microphone 1140 in order to allow voice communication. The UE may further comprise a plurality of programs 1170, *e.g.*, a browser, 1171, that can render at least one type of data object and an encryption/decryption engine 1172 allowing data object requests to be encrypted and data objects to be decrypted. The UE may optionally be equipped with a cache memory in which it is possible to store and retrieve data objects without occupying transmission resources within the communication network 10.

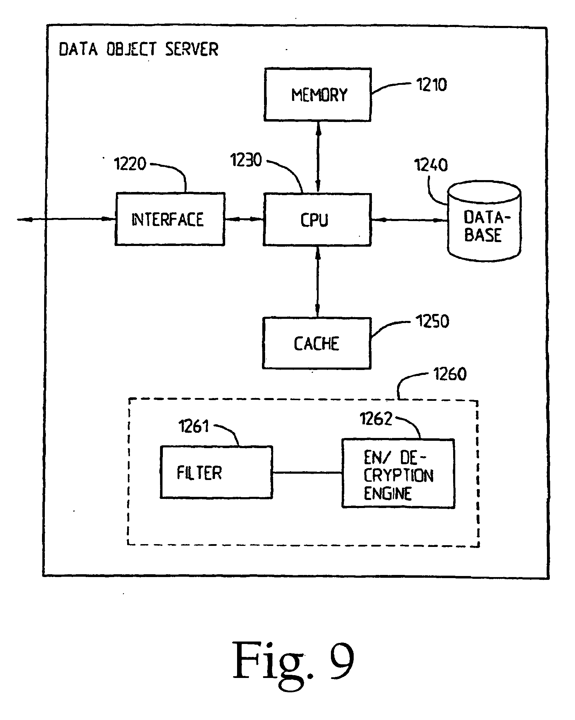

Figure 9 illustrates a data object server 130, according to one embodiment of the present invention. The data object server comprises at least one CPU 1230 connected to at least one memory device 1210, a cache memory 1250, at least one database 1240 and at least one interface 1220. Memory devices 1210 and databases 1240 may be non-volatile. The interface 1220 enables the CPU 1230 to send and receive data to/from the data network 120. The cache memory 1250 allows storage of frequently used data objects so that the CPU 1230 may obtain them readily. The database 1240 contains the actual data objects that can be requested by the UE 100 via a communication infrastructure 110 and a data network 120. The data object server may also further comprise a number of programs 1260 including, but not limited to, a filter 1261 allowing the data objects to be optimized according to the rendering capabilities of the UE 100; and an encryption/decryption engine 1262 allowing data object requests to be decrypted and data objects to be encrypted.

According to a variant of the invention the blocks 1210, 1220, 1230, 1240, 1250 and 1260 may be implemented on a plurality of computers. According to another variant of the present invention, the said plurality of computers may be located at a substantial distance.

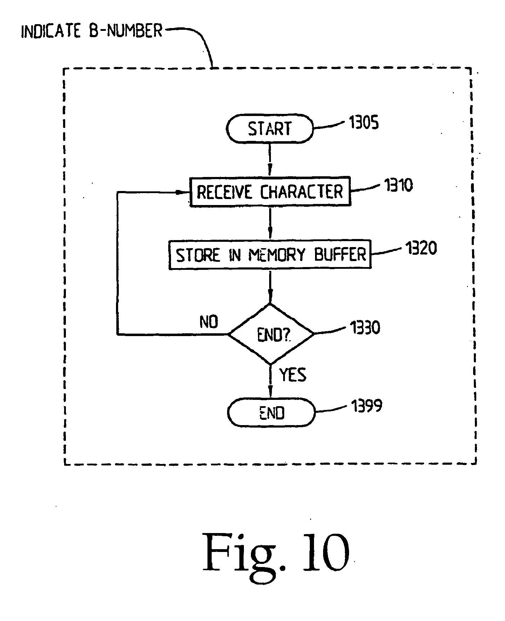

B-number indication involves any means of indicating a B-number in an A-party UE. A first example of B-number indication procedure is described with reference to Figure 10 where the B-number indication comprises a start step at 1305 and the step 1310 of receiving a character from a keyboard arrangement. In response to step 1310, the character is stored in a memory buffer in the UE in step 1320 and it is checked if the B-number is complete in step 1330. If the number is incomplete, steps 1310, 1320 and 1330 are repeated. If the B-number is complete, the B-number indication procedure is concluded in 1399. Determination of B-number completion 1330 may or may not involve the use of timers supervising the indication procedure; a short key combination in order to minimize the number of keys pressed; designated buttons to indicate number completion (*e.g*., pressing SEND or CALL buttons once) or by analyzing the digits in the memory buffer for B-number completeness.

A second example of B-number indication is by means of voice detection, whereby an incoming talk spurt is successfully matched with an entry in an internal database contained in a UE 100, whereby a valid B-number could be obtained in response to the aforementioned talk spurt.

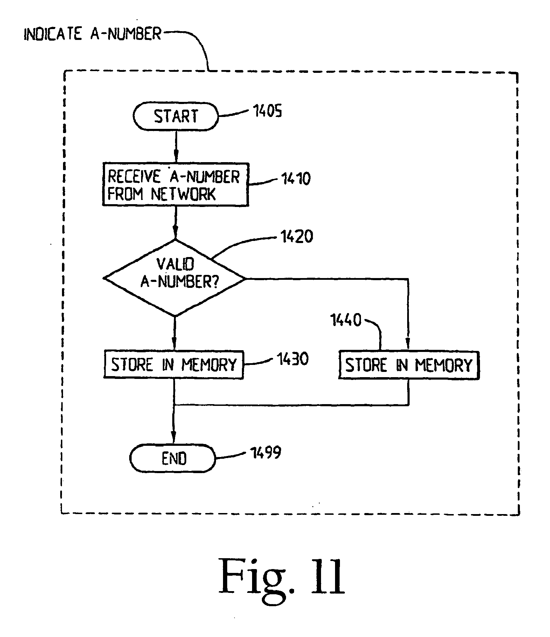

A-number indication involves any means of indicating an A-number to a said UE 100. A first example of an A-number indication procedure is described with reference to Figure 11 where the A-number indication comprises the step 1405 of starting the procedure and 1410 of receiving an A-number from a communication infrastructure 110. In response to step 1410, it is checked if the A-number was valid (*e.g*., not blocked, secret or misinterpreted) and if it was valid, the A-number is stored in a memory in the UA 100 in step 1430. If the A-number was not valid, a flag indicating a non valid A-number is stored in a memory of UE 100 in step 1440. The procedure is ended in 1499.

A second example of A-number indication is by means of sending an A-number or data objects in response to an A-number directly on a logical data communication link 161.

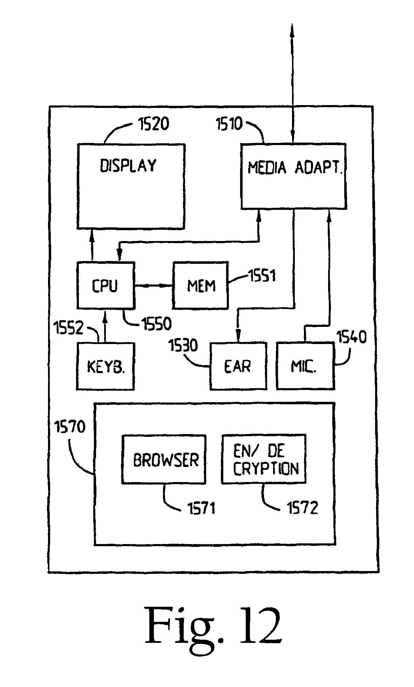

Figure 12 illustrates a UE 100 according to a second variant of the invention when the UE 100 is a fixed telephone with graphic capabilities. According to this second variant, the UE 100 is equal to a mobile telephone as described in Figure 8 but with the exception that the radio unit 1110 and antenna 1160 are replaced with a media adapter 1510 that converts incoming and outgoing signals to and from a particular media standard including but not limited to ISDN, ADSL, HDSL, VDSL and Cable networks and any combination thereof.

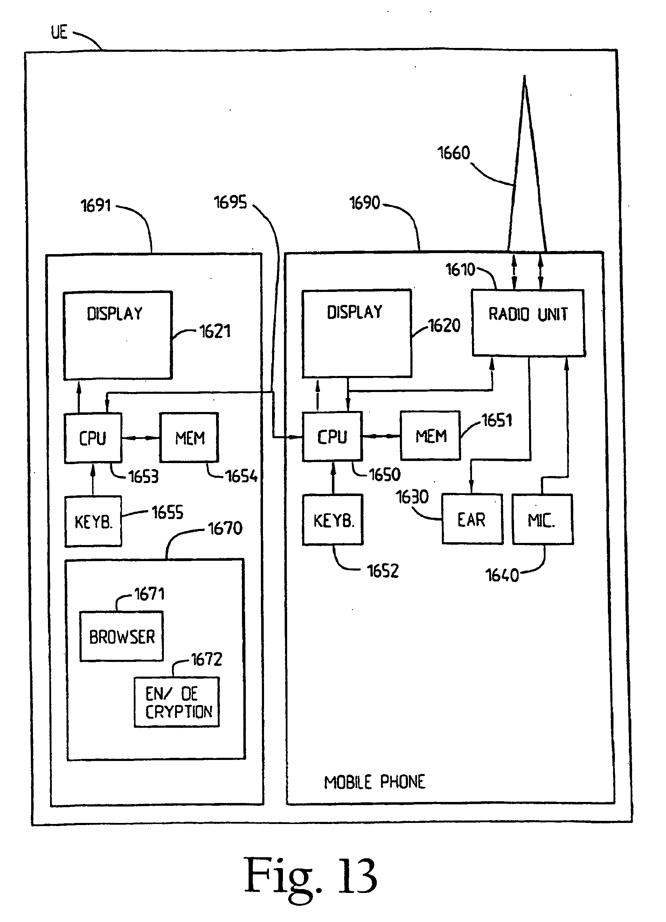

Figure 13 illustrates a UE 100 according to another embodiment of the invention when the UE 100 is a mobile telephone 1690 possibly without data object rendering capabilities, with an antenna 1660, connected to a PDA 1691 via a communication link 1695. The communication link may for example be realized with an infrared, radio (*e.g*., Bluetooth) or wire communication arrangement. The PDA 1691 further comprises a CPU 1653 connected to at least one memory unit 1654, and at least one display 1621. The CPU 1653 may also be connected to a keyboard device or area 1655 to allow subscribers to enter, for example, digits. The memory unit 1654 may be non-volatile (*e.g*., EEPROM or SIM card) in order to retain stored information, should power be temporarily unavailable. The PDA 1691 further comprises a collection of programs 1670 including but not limited to a browser 1671 that can render at least one type of data object and an encryption/decryption engine 1672 allowing data object requests to be encrypted and data objects to be decrypted. The mobile phone 1690 is further described in Figure 8 where 1620 corresponds to 1120, 1610 corresponds to 1110, 1650 corresponds to 1150, 1651 corresponds to 1151, 1652 corresponds to 1152, 1630 corresponds to 1130 and 1640 corresponds to 1140.

There are a number of possible technologies available that are suitable for implementing phonepage functionality in the UE (phonepage client). Examples of such technologies in the context of GSM include SIM toolkit; WAP/WTA; Java and MeXE; and native implementation. Regardless of the implementation details, the main function of the client is to detect call events and launch the browser to the appropriate URL determined by event type, content type, other party's identity, own identity, HPLMN, VPLMN, visiting country code, terminal capability, and other parameters as described in this document. Additionally the client could provide functions for, *e.g*., activation and configuration of service, security, soft-keys and menus.

As an alternative to directly launching the browser the client may send an SMS to the server which would respond with a push message (*e.g*., WAP push) containing the phonepage.

Another technology suitable for implementing a phonepage client in the UE is Java. Using, for example, JavaPhone functionality for automatic phonepage download over, *e.g*., WAP, HTML or SMS can be obtained. Moreover, functionality such as a context sensitive phonepage soft-key can also be obtained. The soft-key could, *e.g*., automatically appear after a call, in phone address book, and in a call log. When pressing the soft-key a phonepage associated with the telephone number on the display is automatically downloaded.

In a preferred embodiment the functionality of a data object server 130 is divided into two logically different parts, a name server and an object server. A name server and an object server might be physically separated or just logically separated. The name server provides translation between address indications such as telephone numbers, events and an appropriate location of an object server where desired objects, phonepages, reside, *e.g*., URIs (Universal Resource Identifiers), URLs (Universal Resource Locators). An object server hosts the desired objects, the content of the phonepages. Several name servers might be provided, for example a specific name server might be operated by a mobile telephone network operator or a vendor of a mobile telephone. The particular embodiment of the user equipment will determine which name server is used. The name server can be given by the service provider used, can be based on country, be a general global, be dependent on service (such as email), or a combination. In a preferred embodiment, the user equipment associated with a specific network operator by means of, *e.g*., a SIM card, will automatically send a request to a name server hosted by the network operator. By automatically, as preprogrammed in, *e.g*., a SIM card, directing a request from user equipment to a name server hosted by the user's designated network operator (*e.g*., determined by a SIM card), several advantages such as related to security, speed and redundancy, can be obtained.

According to a variant of the invention, translation of numbers and events to URLs can be made in the UE itself. Upon detection of a triggering event, the UE looks in a memory position (*e.g*., SIM card or address book) and retrieves or computes a URL corresponding to a particular other party and event. The URL is then conveyed to the other party via SMS. Upon reception of the URL by the other party, the data objects are automatically retrieved.

In another variant of the present invention, USSD or UUI (User-User Information) according to the GSM standard can be used to convey an URL instead of a SMS. In yet another variant, IP signaling between two UIs can be used for conveying the SMS instead of using SMS.

### Retrieval of Secondary Information To User Equipment

According to another embodiment of the present invention, information that is related to, relevant to, or associated with an ongoing communication (a "primary communication") between a user and a first data source, such as a data server or another user, may be retrieved and provided. For simplicity, this will be referred to as "secondary information." Examples of secondary information include album artwork, lyrics, etc. corresponding to a song; performance schedules for an artist: trivia, facts, news, etc. about an artist, album, or video; statistics related to a sports team; weather related to a destination; stock information corresponding to a company, etc.

The relationship or association between the primary communication and the secondary information may be a direct relationship. An example of such is information about an artist whose music is being streamed. The relationship or association may also be indirect, or user-defined. An example of user-defined logic is a user specifying that if A or B is detected, information type C or D is to be retrieved about A or B. In the context of music, A and B could be individual artists, C could be places where A and/or B live (known to user), D could be a group (band) that A and/or B were formerly part of (also known to user).

Examples of primary communications involve voice, audio and video streams, and data streams (*e.g*., text messages, instant messages, etc.).

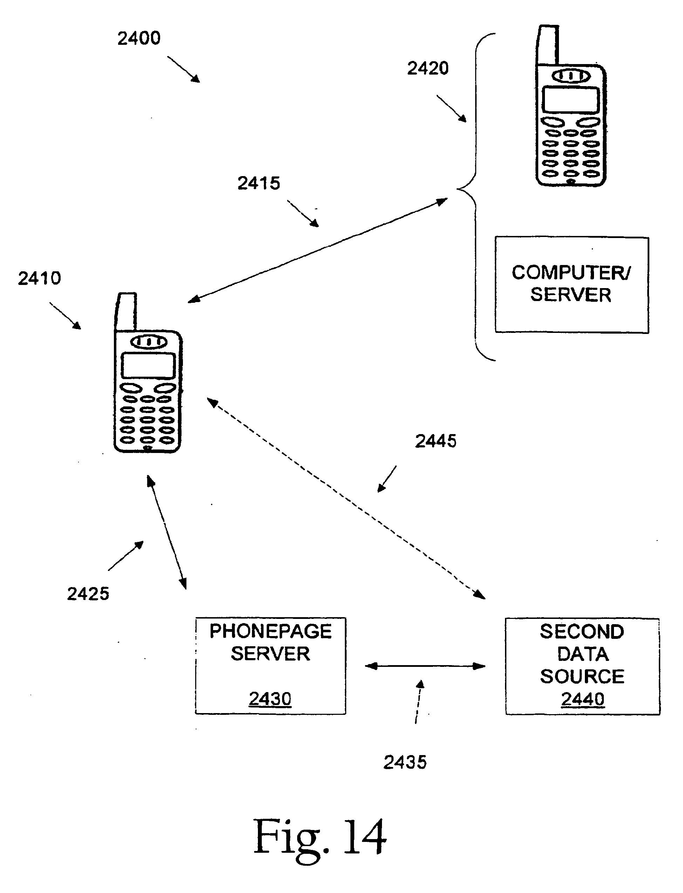

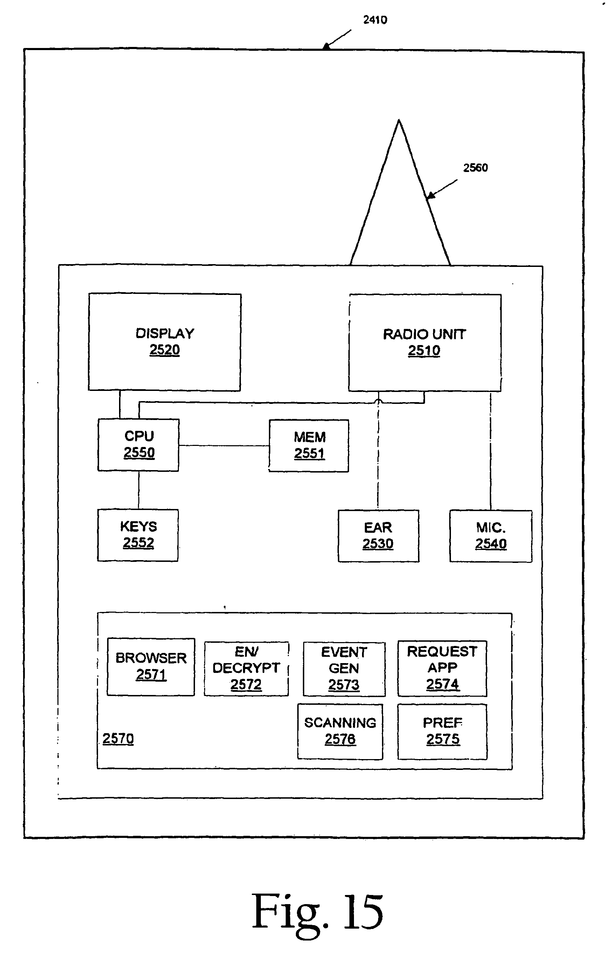

Referring to Figure 14, system 2400 includes a communication device, such as user equipment (UE) 2410. As discussed above with reference to FIGS. 5, 11 and 15, UE 2410 may be any device with communication capability, including, for example, a fixed-line phone, a mobile telephone, data equipment, *e.g*., Personal Digital Assistance devices (PDA), desktop, laptop and handheld computers, etc. One embodiment of UE 2410 will be described in greater detail below with reference to Figure 15.

UE 2410 communicates with first data source 2420 via communication channel 2415. Although the figure depicts first data source 2420 as a mobile phone or server, first data source 2420 may be another UE, a landline telephone, a data server, such as a computer, an Internet-based server including those under user control (home media center, TiVo, slingbox, etc.), free public sources (Internet radio), fee-based sources, subscription-based sources, etc. In one embodiment, this communication may be via a communication infrastructure (not shown), such as is discussed above. Communication channel 2415 may be a bidirectional or a unidirectional channel. Example communication channels 2415 include broadcast, multicast, and unicast channels.

UE 2410 also communicates with phonepage server 2430 in order to transmit and receive data via communication channel 2425. In one embodiment, phonepage server 2430 may include a Phonepage Number Service (PNS) server and a Phonepage Web Server (PWS).

Phonepage server 2430 communicates with second data source 2440 over communication link 2435. In one embodiment, second data source 2440 may include at least one data object server. As discussed above, pluralities of data object servers are typically included in a data network, although, for reasons of explanation and clarity, only one data object server is illustrated in Figure 14. Communications between phonepage server 2430 and second data source 2440 may be by any suitable network, for example, Internet and Intranet networks. Other communication means and networks may be used as necessary and/or desired.

In one embodiment, UE 2410 and second data source may also communicate via communication channel 2445. The use of such a communication channel is described in U.S. Patent Application Publication No. 2007/0127645, filed on Jan. 31, 2007 and entitled "Technique For Providing Secondary Information To A User Equipment."

Referring to Figure 15, a block diagram of UE 2410 according to one embodiment of the present invention is provided. UE 2410 may further comprise a plurality of programs 2570, including, for example, a browser 2571 that can render at least one type of data object and an encode/decode unit 2572 that encodes (or encrypts) requests for data objects and decodes (or decrypts) data objects. In addition, in order to implement the provision of secondary content, UE 2410 may also comprise an event generator application 2673, a request application 2574, a preference module 2575, and a scanning application 2576. The event generator application 2573 may be an embedded piece of software that runs automatically or in response to activation. The event generator application 2573 may generate triggering events either periodically or based on predetermined criteria, while the communication device 2410 is busy receiving and/or rendering a primary content. The request application 2574 may respond to the triggering event and transmit requests for secondary content to a phonepage server.

Preference module 2575 may be used to receive and store a user's information (*e.g*., the user's birthdate, home address, etc.), preferences (*e.g*., the user's favorite artists, music type, sports teams), etc. for the retrieval of secondary information. Other types of information, preferences, etc. may be stored as necessary and/or desired.

In one embodiment, the user may enter his or her information or preferences through keypad or keyboard 2552. In another embodiment, this information may be transmitted and/or downloaded to UE 2410. In another embodiment, a web-based method, similar to that described above, may be used for the remote creation and user download of phone pages

Preference module 2575 may also be provided with a set of user-defined rules for retrieving secondary information, such as the type and amount of secondary information to retrieve.

Scanning application 2576 may be an embedded software application. In one embodiment, scanning application 2576 scans the content of the communication with device 2420. In one embodiment, scanning application monitors the content of a communication between UE 2410 and first data source 2420, and compares the content of that communication with the user's information and/or preferences. In one embodiment, this may involve comparing metadata in the communication for matches to the stored user preferences and profile. In another embodiment, scanning application 2576 may employ image or audio recognition algorithms to identify matches in the content of the primary communication, such as its renderable content, rather than with the metadata. Examples of image recognition algorithms that identify faces may include Eigenface, Fisherface, the Hidden Markov model, Dynamic Link Matching, and three-dimensional face recognition. Examples of audio recognition algorithms may include natural language processing algorithms, and Gracenote's audio recognition system.

In one embodiment, the triggering event occurs when scanning application 2576 identifies a match between the scanned content or metadata and the user's information or preferences. In response to this triggering event, scanning application 2576 may cause UE 2410 to communicate a request for a data object, or it may trigger another application, such as request application 2574, to request the data object.

In one embodiment, the data object request may include information identifying the UE, the requested data object, and a potential location for retrieving the data object. In one embodiment, the information identifying the data object may be generic, such as a set of requirements (*e.g*., information identifying the object of interest in the primary content and information about the preferences of the user with respect to secondary content about that object) which are processed by the phonepages or other server to provide a data object that best matches the information provided (or nothing, if no such match exists). In another embodiment, the information identifying the data object may also specifically identify the data object requested, and may include an identification of where that data object may be found. In these and other embodiments, the amount of information included in the request may depend upon the level of intelligence in the communication device versus the level of intelligence in the network.

In one embodiment, the data object request may also include other information included in a phonepage request.

In one embodiment, the requested data object may be conditioned based on the matched information and any other relevant information that the user has provided. For example, the user may have stored one of his or her favorite bands, and indicated a preference to be informed of upcoming concert dates. The user may also desire concert information for a particular area. In that example, if the user receives audio or video content for that band, UE 2410 would request concert date information for the user's preferred area. Other information that may be relevant to the user may be information regarding the next release by the artist.

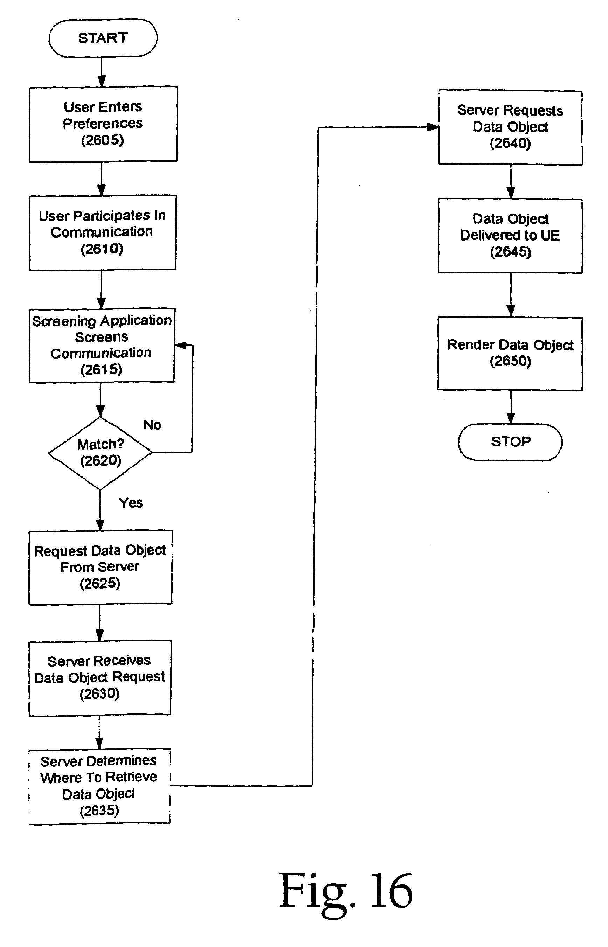

Referring to Figure 16, a flowchart depicting a method of retrieving secondary information according to one embodiment of the present invention is provided.

In step 2605, the user enters his or her information and/or preferences into the user's UE. As discussed above, this may involve providing the UE with a user's information and/or preferences. In one embodiment, this may be entered on the UE's keypad. In another embodiment, this may be transmitted to, or downloaded by, the UE.

The user's preferences and profile may be stored in the memory of the UE.

In step 2610, the user participates in a primary communication with a first data source over a first communication channel using the UE. This primary communication may be with another user (*e.g*., a voice communication, a text communication) or it may be with a data server to retrieve content (*e.g*., receiving a video or audio stream, receiving text, etc.) from the data server.

In step 2615, the scanning application on the UE scans the content of the primary communication for a match with the user's preferences or profile. As discussed above, the scanning application may scan metadata in the communication for matches to the user's favorite artists or genre. In another embodiment, the scanning application may employ image or audio recognition algorithms to identify matches in the content of the primary communication, such as its renderable content.

In one embodiment, the scanning of content or metadata may be periodic. In another embodiment, the scanning of content may be continuous.

In step 2620, if a match is not detected, in one embodiment, the scanning application continues scanning until the primary communication is terminated.

If a match is detected, in step 2625, the match will generate a triggering event in response to which the scanning application may request another application, such as a request application, to request the data object from the phonepage server. In another embodiment, the scanning application may directly request the data object from the phonepage server.

In step 2630, the phonepage server receives the data object request from the UE. In step 2635, the phonepage server attempts to locate the data object(s) needed to fulfill the request. The requested secondary content may comprise one or more data objects. In some cases, the communication device may include information that uniquely identifies each data object. In other cases, the request for the secondary content may be less explicit and may require further action by the phonepage server and/or any designated data object source. For example, in one embodiment, the request for the secondary content might only specify a data object server and the type of data objects needed. Accordingly, the phonepage server may communicate with the specified data object server to identify the requested data objects. In another embodiment, the request might only specify the data objects needed without specifically identifying a source of the data objects. Accordingly, the phonepage server may first identify the appropriate data object server(s) that have the requested data objects available and then request those data objects.

In step 2640, the second data source receives the requests from the phonepage server. In step 2645, the data object server retrieves the data object and transmits it to the UE. In one embodiment, the data object may be retrieved from the data object holder by the data server, and then delivered to the UE. In another embodiment, the data server may request that that data object server deliver the data object directly to the UE via a third communication channel.

In step 2650, the UE may receive the secondary content and render it. One or more component data objects may be cached or stored by the communication device upon receipt and then assembled to construct the secondary content. To render the secondary content on the communication device, the reception and/or rendering of the primary content may be temporarily suspended. Alternatively, the secondary content may be rendered concurrently or simultaneously with the primary content. The rendering options may depend on the type of secondary content as well as the processing or display capabilities of the communication device. If the secondary content is of substantially smaller bandwidth than the primary content, concurrent rendering of both contents may not be a problem. For example, an RSS feed or stock/sports ticker may be easily rendered at the bottom of a video frame. If the secondary content is of a comparable size or complexity as the primary content, concurrent rendering of both contents may not require higher performance from the communication device. For example, it may be more practicable to pause a video-on-demand (VOD) stream in order to play secondary audio or video data object(s). Likewise, there will be some instances where providing a user-friendly interface will dictate the need to stop or pause the rendering of the primary content in order to render the secondary content.

The present disclosure is not to be limited in scope by the specific embodiments described herein. Indeed, other various embodiments of and modifications to the present disclosure, in addition to those described herein, will be apparent to those of ordinary skill in the art from the foregoing description and accompanying drawings. Thus, such other embodiments and modifications are intended to fall within the scope of the present disclosure. Further, although the present disclosure has been described herein in the context of a particular implementation in a particular environment for a particular purpose, those of ordinary skill in the art will recognize that its usefulness is not limited thereto and that the present disclosure may be beneficially implemented in any number of environments for any number of purposes. Accordingly, the claims set forth below should be construed in view of the full breadth of the present disclosure as described herein.

## Claims

1. A method performed in a user's communication device (2410) for providing secondary information to the user's communication device, comprising:
receiving at least one user preference;
engaging in a primary communication with a first data source (2420) via a first communication channel (2415);
**characterised by**
scanning the primary communication for a match with the user preference;
in response to detecting a matched user preference, requesting a data object corresponding to the matched user preference from a server (2430) via a second communication channel (2425); and
receiving the data object in response to the request.

2. The method of claim 1, wherein the step of receiving at least one user preference comprises receiving the at least one user preference entered by a user.

3. The method of claim 1, wherein the step of receiving at least one user preference comprises downloading the at least one user preference over a network.

4. The method of claim 1, wherein the primary communication is one of a voice communication and a data communication.

5. The method of claim 4, wherein the data communication comprises at least one of an audio stream, a video stream, and a text message.

6. The method of claim 1, wherein the step of scanning the primary communication for a match with the user preference comprises:
scanning metadata of the primary communication for a match with the user preference.

7. The method of claim 1, wherein the step of scanning the primary communication for a match with the user preference comprises:
scanning renderable content of the primary communication for a match with the user preference.

8. The method of claim 7, wherein the step of scanning renderable content of the primary communication for a match with the user preference comprises:
using at least one of an image recognition algorithm and an audio recognition algorithm to identify the match with the user preference.

9. The method of claim 1, wherein the server is a phonepage server and, wherein the step of requesting the data object from the phonepage server (2430) via the second communication channel comprises:
identifying a data object to be retrieved; and
identifying a location for the data object to be retrieved.

10. The method of claim 1, wherein the server (2430) is a phonepage server and wherein the step of requesting the data object from the phonepage server (2430) via the second communication channel (2425) comprises:
providing requirements for a data object to be retrieved, the requirements including at least one of the information identifying the content of the primary communication and the matched user preference.

11. A communication device (2410) for receiving secondary information related to a primary communication comprising:
a communications unit for engaging in a primary communication with a data source (2420) via a first communication channel (2415) and a server (2430) via a second communication channel (2425);
a preference application that receives at least one user preference;
**characterised by**
a scanning application that scans the primary communication for a match with the user preference; and
a request application that requests, from the server (2430), a data object corresponding to the matched user preference in response to the match via the second communication channel (2425).

12. The communication device of claim 11, wherein the primary communication is a data communication comprising at least one of an audio stream, a video stream, and a text message.

13. The communication device of claim 11, wherein the scanning application scans metadata of the primary communication for a match with the user preference.

14. The communication device of claim 11, wherein the scanning application scans renderable content of the primary communication for a match with the user preference.

15. The communication device of claim 11, wherein the scanning application uses at least one of an image recognition algorithm and an audio recognition algorithm.

## Patentansprüche

1. Verfahren, welches in einer Kommunikationsvorrichtung (2410) eines Benutzers durchgeführt wird, zum Bereitstellen einer Sekundärinformation für die Kommunikationsvorrichtung des Benutzers, umfassend:
Empfangen von mindestens einer Benutzerpräferenz;
Verbinden mit einer ersten Datenquelle (2420) in einer Primärkommunikation über einen ersten Kommunikationskanal (2415);
**gekennzeichnet durch**
Durchsuchen der Primärkommunikation nach einer Übereinstimmung mit der Benutzerpräferenz;
in Abhängigkeit von einer Erfassung einer übereinstimmenden Benutzerpräferenz Abfragen eines Datenobjekts, welches der übereinstimmenden Benutzerpräferenz entspricht, von einem Server (2430) über einen zweiten Kommunikationskanal (2425); und
Empfangen des Datenobjekts in Abhängigkeit von der Abfrage.

2. Verfahren nach Anspruch 1, wobei der Schritt des Empfangens der mindestens einen Benutzerpräferenz ein Empfangen der mindestens einen Benutzerpräferenz, welche von einem Benutzer eingegeben wird, umfasst.

3. Verfahren nach Anspruch 1, wobei der Schritt des Empfangens der mindestens einen Benutzerpräferenz ein Herunterladen der mindestens einen Benutzerpräferenz über ein Netzwerk umfasst.

4. Verfahren nach Anspruch 1, wobei die Primärkommunikation eine Sprachkommunikation oder eine Datenkommunikation ist.

5. Verfahren nach Anspruch 4, wobei die Datenkommunikation einen Audiodatenstrom, einen Videodatenstrom und/oder eine Textnachricht umfasst.

6. Verfahren nach Anspruch 1, wobei der Schritt des Durchsuchens der Primärkommunikation nach einer Übereinstimmung mit der Benutzerpräferenz umfasst:
Durchsuchen von Metadaten der Primärkommunikation nach einer Übereinstimmung mit der Benutzerpräferenz.

7. Verfahren nach Anspruch 1, wobei der Schritt des Durchsuchens der Primärkommunikation nach einer Übereinstimmung mit der Benutzerpräferenz umfasst:
Durchsuchen eines ausführbaren Inhalts der Primärkommunikation nach einer Übereinstimmung mit der Benutzerpräferenz.

8. Verfahren nach Anspruch 7, wobei der Schritt des Durchsuchens eines ausführbaren Inhalts der Primärkommunikation nach einer Übereinstimmung mit der Benutzerpräferenz umfasst:
Verwenden eines Bilderkennungsalgorithmus und/oder eines Audioerkennungsalgorithmus, um die Übereinstimmung mit der Benutzerpräferenz zu bestimmen.

9. Verfahren nach Anspruch 1, wobei der Server ein Server für Telefonmobilfunkempfänger ist, und wobei der Schritt des Abfragens des Datenobjekts von dem Server (2430) für Telefonmobilfunkempfänger über den zweiten Kommunikationskanal (2425) umfasst:
Bestimmen eines abzufragenden Datenobjekts; und
Bestimmen eines Orts für das abzufragende Datenobjekt.

10. Verfahren nach Anspruch 1, wobei der Server (2430) ein Server für Telefonmobilfunkempfänger ist, und wobei der Schritt des Abfragens des Datenobjekts von dem Server (2430) für Telefonmobilfunkempfänger über den zweiten Kommunikationskanal (2425) umfasst:
Bereitstellen von Anforderungen an ein abzufragendes Datenobjekt, wobei die Anforderungen die Information, welche den Inhalt der Primärkommunikation bestimmt, und/oder die übereinstimmende Benutzerpräferenz aufweist.

11. Kommunikationsvorrichtung (2410) zum Empfangen einer Sekundärinformation, welche mit einer Primärkommunikation in Verbindung steht, umfassend:
eine Kommunikationseinheit für ein Verbinden mit einer Datenquelle (2420) in einer Primärkommunikation über einen ersten Kommunikationskanal (2415) und für eine Kommunikation mit einem Server (2430) über einen zweiten Kommunikationskanal (2425);
eine Präferenzanwendung, welche mindestens eine Benutzerpräferenz empfängt;
**gekennzeichnet durch**
eine Suchanwendung, welche die Primärkommunikation nach einer Übereinstimmung mit der Benutzerpräferenz durchsucht; und
eine Abfrageanwendung, welche in Abhängigkeit von der Übereinstimmung über den zweiten Kommunikationskanal (2425) von dem Server (2430) ein Datenobjekt abfragt, welches der übereinstimmenden Benutzerpräferenz entspricht.

12. Kommunikationsvorrichtung nach Anspruch 11, wobei die Primärkommunikation eine Datenkommunikation ist, welche einen Audiodatenstrom, einen Videodatenstrom und/oder eine Textnachricht umfasst.

13. Kommunikationsvorrichtung nach Anspruch 11, wobei die Suchanwendung Metadaten der Primärkommunikation nach einer Übereinstimmung mit der Benutzerpräferenz durchsucht.

14. Kommunikationsvorrichtung nach Anspruch 11, wobei die Suchanwendung ausführbaren Inhalt der Primärkommunikation nach einer Übereinstimmung mit der Benutzerpräferenz durchsucht.

15. Kommunikationsvorrichtung nach Anspruch 11, wobei die Suchanwendung einen Bilderkennungsalgorithmus und/oder einen Audioerkennungsalgorithmus verwendet.

## Revendications

1. Procédé mis en oeuvre dans un dispositif de communication (2410) d'un utilisateur pour fournir des informations secondaires au dispositif de communication de l'utilisateur, comprenant le fait :
de recevoir au moins une préférence de l'utilisateur ;
de s'engager dans une communication primaire avec une première source de données (2420) via un premier canal de communication (2415) ;
**caractérisé par** le fait
de balayer la communication primaire à la recherche d'une correspondance avec la préférence de l'utilisateur ;
en réponse à la détection d'une préférence de l'utilisateur correspondante, de demander un objet de données correspondant à la préférence de l'utilisateur correspondante depuis un serveur (2430) via un deuxième canal de communication (2425) ; et
de recevoir l'objet de données en réponse à la demande.

2. Procédé de la revendication 1, dans lequel l'étape de réception d'au moins une préférence de l'utilisateur comprend le fait de recevoir l'au moins une préférence de l'utilisateur entrée par un utilisateur.

3. Procédé de la revendication 1, dans lequel l'étape de réception d'au moins une préférence de l'utilisateur comprend le fait de télécharger l'au moins une préférence de l'utilisateur sur un réseau.

4. Procédé de la revendication 1, dans lequel la communication primaire est l'une d'une communication vocale et d'une communication de données.

5. Procédé de la revendication 4, dans lequel la communication de données comprend au moins l'un d'un flux audio, d'un flux vidéo, et d'un message textuel.

6. Procédé de la revendication 1, dans lequel l'étape de balayage de la communication primaire à la recherche d'une correspondance avec la préférence de l'utilisateur comprend le fait :
de balayer des métadonnées de la communication primaire à la recherche d'une correspondance avec la préférence de l'utilisateur.

7. Procédé de la revendication 1, dans lequel l'étape de balayage de la communication primaire à la recherche d'une correspondance avec la préférence de l'utilisateur comprend le fait :
de balayer un contenu pouvant être rendu de la communication primaire à la recherche d'une correspondance avec la préférence de l'utilisateur.

8. Procédé de la revendication 7, dans lequel l'étape de balayage du contenu pouvant être rendu de la communication primaire à la recherche d'une correspondance avec la préférence de l'utilisateur comprend le fait :
d'utiliser au moins l'un d'un algorithme de reconnaissance d'images et d'un algorithme de reconnaissance vocale pour identifier la correspondance avec la préférence de l'utilisateur.

9. Procédé de la revendication 1, dans lequel le serveur est un serveur de page téléphonique et dans lequel l'étape de demande de l'objet de données depuis le serveur de page téléphonique (2430) via le deuxième canal de communication (2425) comprend le fait :
d'identifier un objet de données à récupérer ; et
d'identifier un emplacement pour l'objet de données à récupérer.

10. Procédé de la revendication 1, dans lequel le serveur (2430) est un serveur de page téléphonique et dans lequel l'étape de demande de l'objet de données depuis le serveur de page téléphonique (2430) via le deuxième canal de communication (2425) comprend le fait :
de fournir des exigences pour un objet de données à récupérer, les exigences comportant au moins l'une parmi une information identifiant le contenu de la communication primaire et la préférence de l'utilisateur correspondante.

11. Dispositif de communication (2410) destiné à recevoir des informations secondaires relatives à une communication primaire, comprenant :
une unité de communications pour s'engager dans une communication primaire avec une source de données (2420) via un premier canal de communication (2415) et pour communiquer avec un serveur (2430) via un deuxième canal de communication (2425) ;
une application de préférence qui reçoit au moins une préférence de l'utilisateur ;
**caractérisé par**
une application de balayage qui balaye la communication primaire à la recherche d'une correspondance avec la préférence de l'utilisateur ; et
une application de demande qui demande, depuis le serveur (2430), un objet de données correspondant à la préférence de l'utilisateur correspondante en réponse à la correspondance via le deuxième canal de communication (2425).

12. Dispositif de communication de la revendication 11, dans lequel la communication primaire est une communication de données comprenant au moins l'un d'un flux audio, d'un flux vidéo, et d'un message textuel.

13. Dispositif de communication de la revendication 11, dans lequel l'application de balayage balaye des métadonnées de la communication primaire à la recherche d'une correspondance avec la préférence de l'utilisateur.

14. Dispositif de communication de la revendication 11, dans lequel l'application de balayage balaye un contenu pouvant être rendu de la communication primaire à la recherche d'une correspondance avec la préférence de l'utilisateur.

15. Dispositif de communication de la revendication 11, dans lequel l'application de balayage utilise au moins l'un d'un algorithme de reconnaissance d'images et d'un algorithme de reconnaissance vocal.
